(19)

Europäisches
Patentamt
European
Patent Office
Office européen
des brevets

(11) **EP 2 386 936 A2**

(12) **EUROPEAN PATENT APPLICATION**

(43) Date of publication:
**16.11.2011 Bulletin 2011/46**

(51) Int Cl.:
***G06F 3/042*** *(2006.01)*

(21) Application number: **11165833.2**

(22) Date of filing: **12.05.2011**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME** | (71) Applicant: **Seiko Epson Corporation**<br>**Shinjuku-ku**<br>**Tokyo (JP)** |
| | (72) Inventor: **Onishi, Yasunori**<br>**Nagano 392-8502 (JP)** |
| (30) Priority: **13.05.2010 JP 2010110876** | (74) Representative: **HOFFMANN EITLE**<br>**Patent- und Rechtsanwälte**<br>**Arabellastraße 4**<br>**81925 München (DE)** |

(54) **Optical detection device, display device, and electronic apparatus**

(57) An optical detection device includes: a light source unit that emits source light; a curve-shaped light guide, that includes a light incident surface, to which the source light is incident, located in an end portion of the light guide and a convex surface from which the source light incident from the light incident surface is output; an irradiation direction setting unit that receives the source light output from the convex surface of the light guide and sets an irradiation direction of irradiation light to a direction of a normal line of the convex surface; a slight receiving unit that receives reflection light acquired by reflecting the irradiation light on an object; and a detection unit that detects at least a direction in which the object is located based on a result of the light reception in the light receiving unit.

FIG. 1A

**Description**

BACKGROUND

1. Technical Field

The present invention relates to an optical detection device, a display device, and an electronic apparatus.

2. Related Art

In electronic apparatuses such as a cellular phone, a personal computer, a car navigation device, a ticket-vending machine, and a banking terminal, recently, a display device provided with a position detecting function in which a touch panel is disposed on the front side of a display unit is used. According to such a display device, a user can touch an icon or the like included in a display image or input information while referring to the image displayed on the display unit. As examples of a position detecting method using such a touch panel a resistance type, a capacitance type, and the like are known.

On the other hand, the display area of a projection-type display device (projector) or a display device for a digital signature is wider than that of the display device of a cellular phone or a personal computer. Accordingly, in such display devices, it is difficult to realize position detection using the resistance-type touch panel or the capacitance-type touch panel described above.

As general technologies relating to a position detecting device used for a projection-type display device, for example, technologies disclosed in JP-A-11-345085 and JP-A-2001-142643 are known. However, in this position detecting device, there are problems such as an increase in the size of the system and the like.

SUMMARY

An advantage of some aspects of the invention is that it provides an optical detection device, a display device, an electronic apparatus, and the like capable of sensing an object in a broad range.

According to an aspect of the invention, there is provided an optical detection device including: a light source unit that emits source light; a curve-shaped light guide that guides the source light from the light source unit along a curve-shaped light guiding path; an irradiation direction setting unit that receives the source light output from the outer circumferential side of the light guide and sets the irradiation direction of irradiation light to the direction from the inner circumferential side toward the outer circumferential side of the curve-shaped light guide; a light receiving unit that receives reflection light acquired by reflecting the irradiation light on an object; and a detection unit that detects at least a direction in which the object is located based on a result of the light reception in the light receiving unit.

According to the first aspect, the source light emitted from the light source unit is guided along the curve-shaped light guiding path of the light guide. Then, the source light output from the outer circumferential side of the light guide is output as irradiation light in the direction from the inner circumferential side toward the outer circumferential side of the light guide. When the output light is reflected by the object, the reflection light is received by the light receiving unit, and the direction and the like of the object are detected based on the result of the light reception. According to the optical detection device having the above-described configuration, the irradiation light is output in a radial pattern from the inner circumferential side to the outer circumferential side of the light guide, and the object is detected in accordance with the reflection light. Therefore, an optical detection device capable of sensing an object in a broad range can be realized.

The above-described optical detection device may further include a second light source unit that emits second source light, wherein a first irradiation light intensity distribution is formed in a detection area of the object as the light source unit emits the source light to the light incident surface disposed on one end side of the light guide, and a second irradiation light intensity distribution, which is different from the first irradiation light intensity distribution, is formed in the detection area as the second light source unit emits the second source light to the light incident surface disposed on the other end side of the light guide.

In such a case, since the first and second irradiation light intensity distributions can be formed, for example, by using one light guide, downsizing and the like of the device can be achieved. In addition, since the object can be detected based on the result of the light reception at a time when the first irradiation light intensity distribution is formed and the result of the light reception at a time when the second irradiation light intensity distribution is formed, a sensing operation can be performed while the effects of external disturbing light such as environmental light are reduced, and accordingly, the detection accuracy and the like can be improved.

In addition, the above-described optical detection device may further include: a second light source unit that emits second source light; and a curve-shaped second light guide that guides the second source light emitted from the second light source unit along a curve-shaped light guiding path, wherein a first irradiation light intensity distribution is formed in a detection area of the object as the light source unit emits the source light to the light incident surface disposed on one end side of the light guide, and a second irradiation light intensity distribution, which is different from the first irradiation light intensity distribution, is formed in the detection area as the second light source unit emits the second source light to the light incident surface disposed on the other end side of the second light guide.

By using two light guides as above, optical design such as adjustment of light emission characteristics can be simplified. In addition, since the object can be detected based on the result of the light reception at a time when the first irradiation light intensity distribution is formed and the result of the light reception at a time when the second irradiation light intensity distribution is formed, a sensing operation can be performed while the effects of external disturbing light such as environmental light are reduced, and accordingly, the detection accuracy and the like can be improved.

In addition, in the above-described optical detection device, the light guide and the second light guide may be arranged so as to be aligned in a direction intersecting a surface formed along a direction in which the light guide and the irradiation direction setting unit are aligned.

In such a case, since the light guide and the second light guide can be compactly housed, downsizing and the like of the device can be achieved.

In addition, in the above-described optical detection device, the first irradiation light intensity distribution may be an intensity distribution in which the intensity of irradiation light decreases from one end side of the light guide toward the other end side of the light guide, and the second irradiation light intensity distribution may be an intensity distribution in which the intensity of irradiation light decreases from the other end side of the light guide toward the one end side of the light guide.

In such a case, since an irradiation light intensity distribution of which the intensity differs in accordance with the irradiation direction can be formed, the object can be sensed by performing a simplified process using the intensity distribution.

In addition, the optical detection device may further include a control unit that controls light emission of the light source unit and the second light source unit, wherein the control unit controls so as to alternately form the first irradiation light intensity distribution and the second irradiation light intensity distribution by alternately allowing the light source unit and the second light source unit to emit light.

In such a case, the first and second irradiation light intensity distributions are formed by the light source unit and the second light source unit that are alternately allowed to emit light by the control unit, and accordingly, an object can be sensed.

In addition, the above-described optical detection device may further include a control unit that controls light emission of the light source unit and the second light source unit, wherein the control unit performs emission control of the light source unit and the second light source unit such that a detected amount of light reception in the light receiving unit during a first light emission period during which the light source unit emits light and a detected amount of light reception in the light receiving unit during a second light emission period during which the second light source unit emits light are the same.

In such a case, since the effect of external disturbing light at the time of forming the first irradiation light intensity distribution and the effect of the external disturbing light at the time of forming the second irradiation light intensity distribution can be offset, the detection accuracy and the like can be improved. The light emission control performed such that the detected amount of light reception during the first light emission period and the detected amount of light reception during the second light emission period are the same may be the light emission control that is performed through a reference light source unit.

In addition, in the above-described optical detection device, the detection unit may detect a distance to the object based on a result of the light reception in the light receiving unit and detect a position of the object based on the distance and the direction of the object.

In such a case, by acquiring the distance to the object, not only the direction of the object but also the position of the object can be detected.

In addition, the above-described optical detection device may further include an irradiation direction regulating unit that regulates the irradiation direction of the irradiation light so as to be a direction along the surface of the detection area of the object.

In such a case, since the outspread of the irradiation light in the direction intersecting the detection area of the object can be suppressed, incorrect detection and the like can be prevented.

In addition, in the above-described optical detection device, the irradiation direction regulating unit may be a slit having a first slit face and a second slit face formed along the surface of the detection area.

In such a case, by disposing only the slit in the casing of the optical detection device, the irradiation direction of the irradiation light can be regulated to be the direction along the surface of the detection area of the object.

In addition, in the above-described optical detection device, concave portions may be formed in the first slit face and the second slit face.

In such a case, since the surface reflection on the first and second slit faces can be suppressed, the spread-out of the irradiation light can be more effectively suppressed.

According to another aspect of the invention, there is provided a display device including any of the above-described optical detection devices.

According to still another aspect of the invention, there is provided an electronic apparatus including any of the above-described optical detection devices.

BRIEF DESCRIPTION OF THE DRAWINGS

The invention will be described with reference to the accompanying drawings, wherein like numbers reference like elements.

Figs. 1A and 1B are an example of the basic configurations of an optical detection device, a display device, and the like according to this embodiment.

Figs. 2A and 2B are explanatory diagrams illustrating a detection technique according to this embodiment.

Figs. 3A and 3B are explanatory diagrams illustrating a detection technique according to this embodiment.

Fig. 4 is a first configuration example of an optical detection device according to this embodiment.

Fig. 5 is a second configuration example of an optical detection device according to this embodiment.

Fig. 6 is an explanatory diagram illustrating the disposition of a light guide of the second configuration example.

Figs. 7A and 7B are examples of a signal waveform for illustrating a detection technique according to this embodiment.

Fig. 8 is a modified example of the optical detection device.

Figs. 9A and 9B are explanatory diagrams of an irradiation direction regulating unit.

Fig. 10 is a detailed configuration example of an irradiation unit.

Fig. 11 is a detailed configuration example of an irradiation unit.

Fig. 12 is a detailed configuration example of an irradiation unit.

Figs. 13A and 13B are explanatory diagrams of an irradiation-direction setting unit.

Figs. 14A to 14C are explanatory diagrams of a prism sheet and a diffusion sheet.

Fig. 15 is an explanatory diagram illustrating a technique for setting an irradiation direction.

Fig. 16 is a detailed example of the configuration of a detection unit and the like.

DESCRIPTION OF EXEMPLARY EMBODIMENTS

Hereinafter, preferred embodiments of the invention will be described in detail. The embodiments described below are not for the purpose of limiting the scope of the invention as defined by the claims. In addition, not all the configurations described in the embodiments are set as essential prerequisites of the invention.

1. Basic Configuration

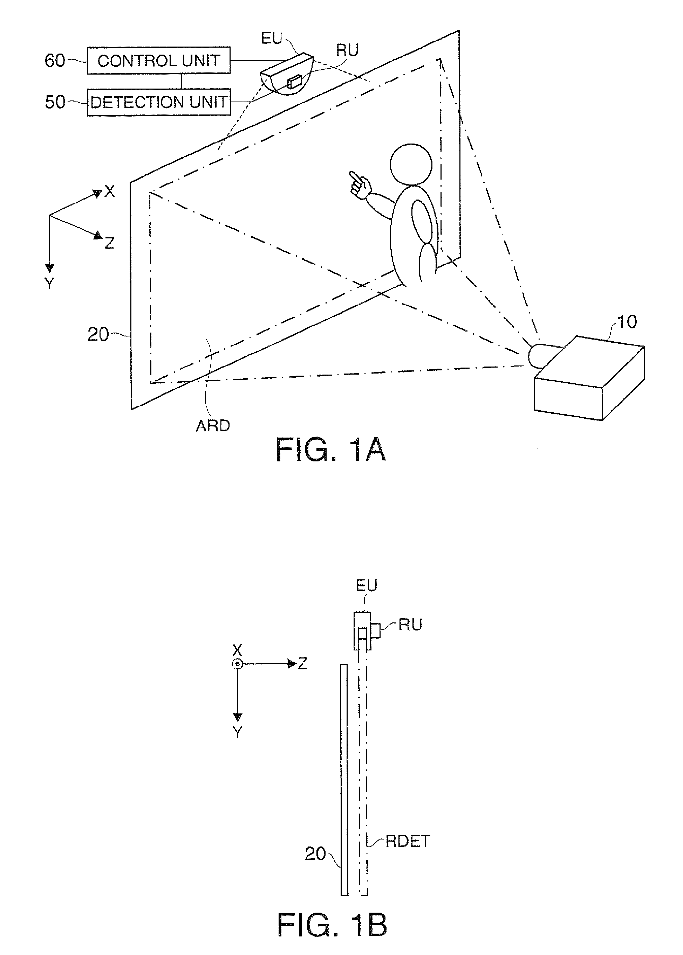

Figs. 1A and 1B illustrate an example of the basic configurations of an optical detection device according to this embodiment and a display device or an electronic apparatus that uses the optical detection device. Figs. 1A and 1B are examples in which the optical detection device according to this embodiment is applied to a liquid crystal projector or a projection-type display device (projector) known as a digital micro mirror device. In Figs. 1A and 1B, axes intersecting with one another are set as an X axis, a Y-axis, and a Z-axis (in a broader sense, first, second, and third coordinate axes). To be more specific, the direction of the X-axis is set as the horizontal direction, the direction of the Y-axis is set as the vertical direction, and the direction of the Z axis is set as the depth direction.

The optical detection device according to this embodiment includes an irradiation unit EU, a light receiving unit RU, and a detection unit 50. In addition, the optical detection device includes a control unit 60. The display device (electronic apparatus) according to this embodiment includes the optical detection device and a screen 20 (in a broader sense, a display unit). Furthermore, the display device (electronic apparatus) may include an image projecting device 10 (in a broader sense, an image generating devices). In addition, the configurations of the optical detection device, the display device, and the electronic apparatus according to this embodiment are not limited to the configuration shown in Figs. 1A and 1B. Thus, various modifications such as the omission of some of the constituent elements thereof or the addition of another constituent element can be made therein.

The image projecting device 10 projects image display light from a projection lens disposed on the front side of the casing toward the screen 20 in an enlarged scale. To be more specific, the image projecting device 10 generates display light of a color image and outputs the display light toward the screen 20 through the projection lens. Accordingly, the color image is displayed on a display area ARD of the screen 20.

The optical detection device according to this embodiment, as shown in Fig. 1B, optically detects an object such as a user's finger or a touch pen in a detection area RDET that is set to the front side (the side of the Z-axis direction) of the screen 20. Accordingly, the irradiation unit EU of the optical detection device emits irradiation light (detection light) that is used for detecting an object. To be more specific, the irradiation unit EU emits irradiation light of which the intensity (illuminance) differs in accordance with the irradiation direction in a radial pattern. Therefore, an irradiation light intensity distribution in which the intensity differs in accordance with the irradiation direction is formed in the detection area RDET. Here, the detection area RDET is an area that is set along the X-Y plane to the side (the user side) of the screen 20 (the display unit) in the Z direction.

The light receiving unit RU receives reflection light that is acquired by allowing the irradiation light emitted from the irradiation unit EU to be reflected by the object. This light receiving unit RU can be implemented by a light receiving device such as a photo diode or a photo transistor. The detection unit 50 is connected to the light receiving unit RU, for example, in an electrical manner.

The detection unit 50 detects at least the direction in which the object is located based on a result of the light reception in the light receiving unit RU. The function of this detection unit 50 can be realized by an integrated circuit device having an analog circuit and the like or software (a program) that operates on a microcomputer. For example, the detection unit 50 converts a detection current that is generated by light receiving devices of the light receiving unit RU in accordance with the reception of the reflection light reflected from the object into a detection voltage and detects the direction in which the object is located and the like based on the detection voltage as the result of light detection. To be more specific, the detection unit 50 detects a distance (a distance from the arranged position of the irradiation unit) to the object based on the result (a light reception signal) of light reception in the light receiving unit RU. Then, the detection unit 50 detects the position of the object based on the detected distance and the direction (the direction in which the object is placed) of the detected object. To be more specific, the X and Y coordinates of the detection area RDET on the XY-plane are detected. Here, first and second irradiation units that are separated from each other by a predetermined distance in the X-axis direction may be arranged. In such a case, the direction of the object with respect to the first irradiation unit is detected as a first direction based on a result of the light reception of first reflection light acquired by allowing first irradiation light emitted from the first irradiation unit to be reflected from the object. In addition, the direction of the object with respect to the second irradiation unit is detected as a second direction based on a result of the light reception of second reflection light acquired by allowing second irradiation light emitted from the second irradiation unit to be reflected from the object. Then, the position of the object may be detected based on the detected first and second directions and the distance between the first and second irradiation units.

The control unit 60 performs various control processes of the optical detection device. To be more specific, the control unit 60 performs control of the light emission of the light source unit of the irradiation unit EU and the like. The control unit 60 is electrically connected to the irradiation unit EU and the detection unit 50. The function of the control unit 60 can be realized by an integrated circuit device, software operating on a microcomputer, or the like. For example, in a case where the irradiation unit EU includes first and second light source units, the control unit 60 controls the first and second light source units to alternately emit light. In addition, in a case where the first and second irradiation units are disposed as described above, during a first period during which the direction of an object with respect to the first irradiation unit is acquired, the control unit 60 controls the first and second light source units disposed in the first irradiation unit to alternately emit light. In addition, during a second period during which the direction of an object with respect to the second irradiation unit is acquired, the control unit 60 controls third and fourth light source units disposed in the second irradiation unit to alternately emit light.

The optical detection device according to this embodiment is not limited to being applied to the projection-type display device shown in Fig. 1A and can be applied to various display devices mounted in various electronic apparatuses. As electronic apparatuses to which the optical detection device according to this embodiment can be applied, various apparatuses such as a personal computer, a car navigation apparatus, a ticket-venting machine, a mobile information terminal, and a banking terminal can be considered. Such an electronic apparatus, for example, may include a display unit (display device) that displays an image, an input unit that is used for inputting information, a processing unit that performs various processes based on the input information or the like, and the like.

2. Technique for Detecting Object

Next, a technique for detecting an object according to this embodiment will be described in detail.

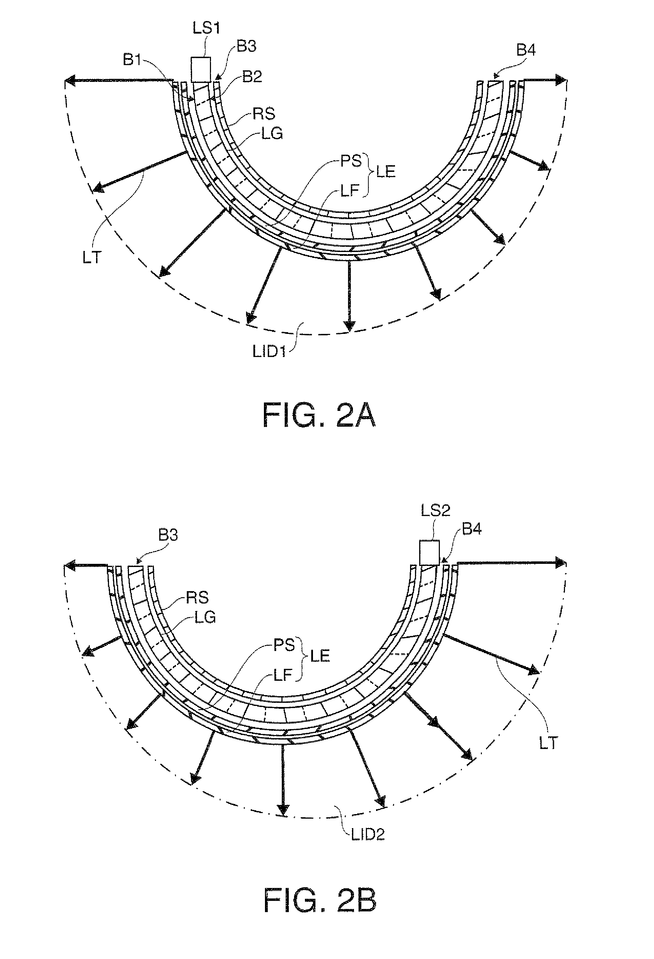

As shown in Fig. 2A, the optical detection device (the irradiation unit) according to this embodiment includes a light source unit LS1, a light guide LG, and an irradiation direction setting unit LE. In addition, the optical detection device includes a reflection sheet RS. The irradiation direction setting unit LE includes an optical sheet PS and a louver film LF. Furthermore, various modifications such as the omission of some of the constituent elements and the addition of another constituent element may be made therein.

The light source unit LS1 emits source light and includes a light emitting device such as an LED (light emitting diode). This light source unit LS1, for example, emits source light that is infrared light (near-infrared light close to the visible light range). In other words, it is preferable that the source light emitted by the light source unit LS1 is light of a wavelength band that is efficiently reflected by an object such as a user's finger or a touch pen or light of a wavelength band that is not included much in environment light that becomes external disturbing light. To be more specific, infrared light having a wave length of about 850 nm that is light of a wavelength band having high reflectance for the surface of a human body or infrared light having a wavelength of about 950 nm that is not included much in the environmental light, or the like is preferable.

The light guide LG (a light guiding member) guides the source light emitted by the light source unit LS1. For example, the light guide LG guides the source light emitted from the light source unit LS1 along a light guiding path having a curved shape, and the shape of the light guide is a curved shape. To be more specific, in Fig. 2A, the light guide LG has an arc shape. Although the light guide LG is formed in an arc shape having a center angle of 180 degrees in Fig. 2A, the shape of the light guide LG may be an arc having a center angle less than 180 degrees. The light guide LG is formed of a transparent resin member or the like such as acrylic resin or polycarbonate. The source light emitted from the light source unit LS1 is incident to a light incident surface arranged on one end side (the left side in Fig. 2A) of the light guide LG.

At least one of the outer circumferential side (the side denoted by B1) and the inner circumferential side (the side denoted by B2) of the light guide LG is processed so as to adjust the light emission efficiency of the source light emitted from the light guide LG. As the processing technique, various techniques such as a silk printing method in which reflective dots are printed, a molding method in which a concave-convex is attached through a stamper or injection, or a groove processing method can be employed.

The irradiation direction setting unit LE (an irradiation light emitting unit) that is implemented by the prism sheet PS and the louver film LF is disposed on the outer circumferential side of the light guide LG and receives the source light emitted from the outer circumferential side (an outer circumferential surface) of the light guide LG. Then, the irradiation direction setting unit LE emits irradiation light LT of which the irradiation direction is set to the direction from the inner circumferential side (B2) toward the outer circumferential side (B1) of the curve-shaped (arc-shaped) light guide LG. In other words, the irradiation direction setting unit LE, for example, sets (regulates) the direction of the source light emitted from the outer circumferential side of the light guide LG to the irradiation direction along the direction of the normal line (the radial direction) of the light guide LG. Accordingly, the irradiation light LT is emitted in a radial pattern in a direction from the inner circumferential side toward the outer circumferential side of the light guide LG.

The setting of the irradiation direction of the irradiation light LT is realized by the prism sheet PS, the louver film LF, and the like of the irradiation direction setting unit LE. For example, the prism sheet PS sets the direction of the source light that is emitted with a low viewing angle from the outer circumferential side of the light guide LG to rise up on the side of the normal line direction and to have the peak of the light emission characteristic in the direction of the normal line. The louver film LF shields (cuts) light (light with a low viewing angle) in the directions other than the direction of the normal line. In addition, as will be described later, a diffusion sheet or the like may be arranged in the irradiation direction setting unit LE. In addition, the reflection sheet RS is disposed on the inner circumferential side of the light guide LG. By arranging the reflection sheet RS on the inner circumferential side as above, the light emission efficiency of the source light toward the outer circumferential side can be enhanced.

As shown in Fig. 2A, by emitting the source light to the light incident surface that is one end side (B3) of the light guide LG using the light source unit LS1, a first irradiation light intensity distribution LID1 is formed in a detection area (RDET shown in Fig. 1B) of an object. The first irradiation light intensity distribution LID1 is an intensity distribution in which the intensity of the irradiation light decreases from one end side (B3) of the light guide LG toward the other end side (B4) thereof. In other words, in Fig. 2A, the magnitude of a vector of the irradiation light LT represents the intensity (illuminance), and the intensity of the irradiation light LT is the highest on one end side (B3) of the light guide LG and is the lowest on the other end side (B4) thereof. From the one end side of the light guide LG toward the other end side thereof, the intensity of the irradiation light LT monotonously decreases.

Meanwhile, as shown in Fig. 2B, by emitting the second source light to the light incident surface of the other end side (B4) of the light guide LG using the second light source unit LS2, a second irradiation light intensity distribution LID2 is formed in the detection area. This second irradiation light intensity distribution LID2, differently from the first irradiation light intensity distribution LID1, is an intensity distribution in which the intensity of the irradiation light decreases from the other end side (B4) of the light guide LG toward the one end side (B3) thereof. In other words, in Fig. 2B, the intensity of the irradiation light LT is the highest on the other end side of the light guide LG and is the lowest on the one end side. In addition, from the other end side toward the one end side, the intensity of the irradiation light LT monotonously decreases.

By forming such irradiation light intensity distributions LID1 and LID2 and receiving reflection light, which is reflected from an object, of the irradiation light having the irradiation light intensity distributions, the object can be detected with high accuracy by suppressing the effects of external disturbing light such as environmental light to a minimum level. In other words, an infrared component that is included in the external disturbing light can be offset, and adverse effects of the infrared component on the detection of an object can be suppressed to a minimum level.

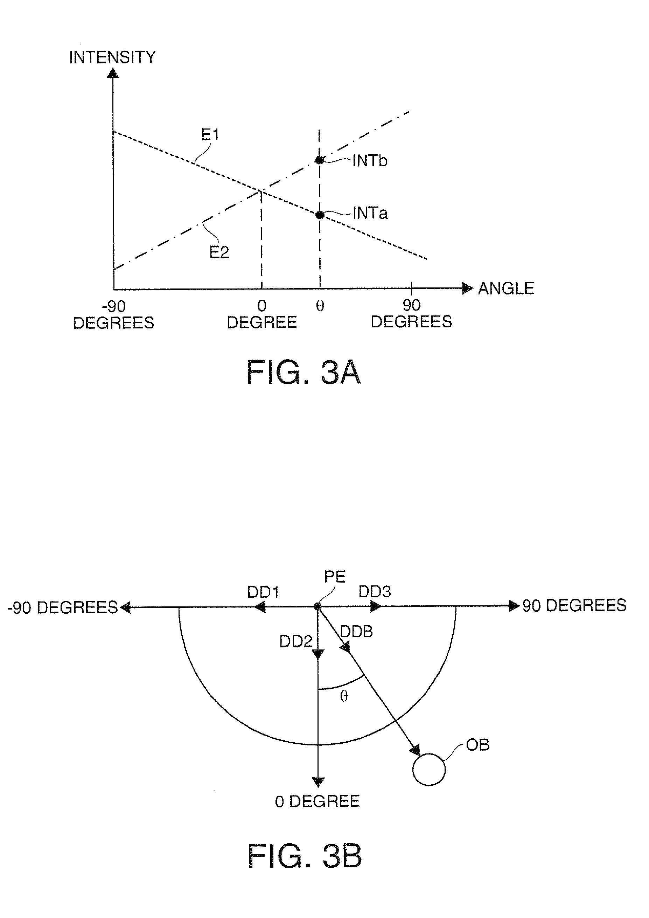

For example, E1 shown in Fig. 3A is a graph illustrating the relationship between the angle of the irradiation direction of the irradiation light LT and the intensity of the irradiation light LT at the angle in the irradiation light intensity distribution LID1 shown in Fig. 2A. Here, E1 shown in Fig. 3A has the highest intensity in a case where the irradiation direction is the direction of DD1 (the leftward direction) shown in Fig. 3B. On the other hand, the intensity is the lowest in a case where the irradiation direction is the direction of DD3 (the rightward direction) and is intermediate in the direction of DD2. To be more specific, the intensity of the irradiation light monotonously decreases in accordance with a change in the angle from the direction DD1 to the direction DD3 and, for example, linearly changes. In Fig. 3B, the center position of the arc shape of the light guide LG is the arranged position PE of the optical detection device.

In addition, E2 shown in Fig. 3A is a graph illustrating the relationship between the angle of the irradiation direction of the irradiation light LT and the intensity of the irradiation light LT at the angle in the irradiation light intensity distribution LID2 shown in Fig. 2B. Here, E2 shown in Fig. 3A has the highest intensity in a case where the irradiation direction is the direction of DD3 shown in Fig. 3B. On the other hand, the intensity is the lowest in a case where the irradiation direction is the direction of DD1 and is intermediate in the direction of DD2. To be more specific, the intensity of the irradiation light monotonously decreases in accordance with a change in the angle from the direction DD3 to the direction DD1 and, for example, linearly changes. Here in Fig. 3A, the relationship between the angle of the irradiation direction and the intensity is represented as linear. However, this embodiment is not limited thereto, and, for example, the relationship may be hyperbolic or the like.

As shown in Fig. 3B, it is assumed that an object OB is present in the direction DDB of an angle θ. Then, in a case where the irradiation light intensity distribution LID1 is formed (in the case of E1) in accordance with light emission of the light source unit LS1 as shown in Fig. 2A, as illustrated in Fig. 3A, the intensity at the position of the object OB that is present in the direction of DDB (angle θ) is INTa. On the other hand, in a case where the irradiation light intensity distribution LID2 is formed (in the case of E2) in accordance with light emission of the light source unit LS2 as shown in Fig. 2B, the intensity at the position of the object OB that is present in the direction of DDB is INTb.

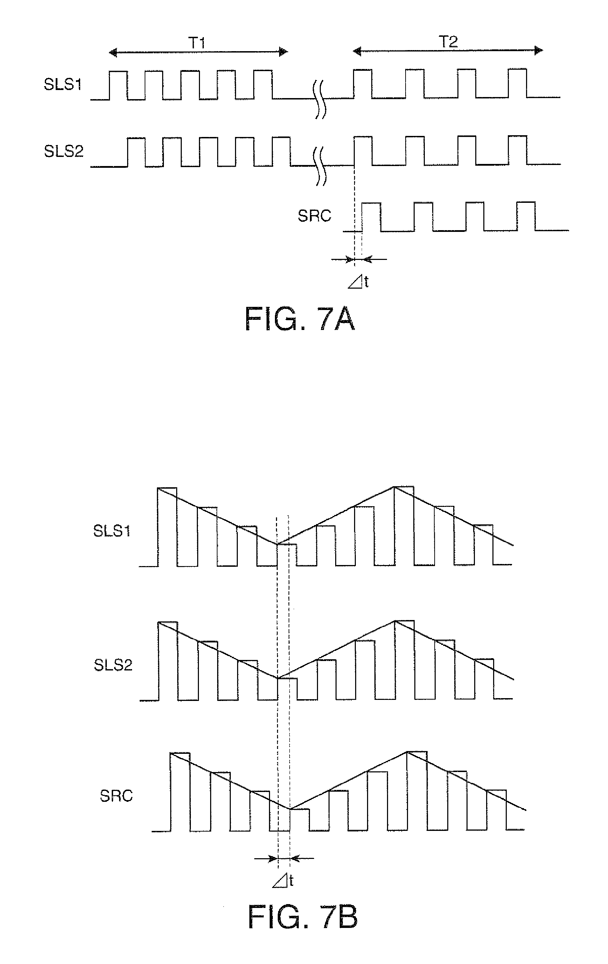

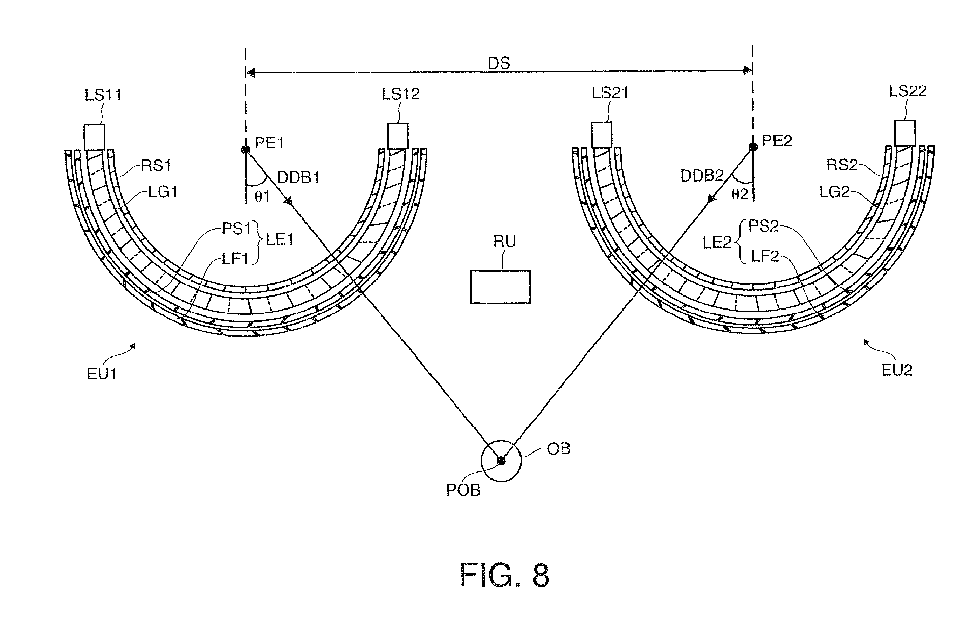

Accordingly, by acquiring the relationship between the intensities INTa and INTb, the direction DDB (angle θ) in which the object OB is located can be specified. Then, by acquiring a distance to the object OB from the arranged position PE of the optical detection device, for example, using a technique illustrated in Figs. 7A and 7B to be described later, the position of the object OB can be specified based on the distance and the direction DDB that have been acquired. Alternatively, as shown in Fig. 8, by arranging two irradiation units EU1 and EU2 and acquiring the directions DDB1 (θ1) and DDB2 (θ2) of the object OB with respect to the irradiation units EU1 and EU2, the position of the object OB can be specified based on the above-described directions DDB1 and DDB2 and a distance DS between the irradiation units EU1 and EU2.

In order to acquire the relationship between the intensities INTa and INTb, the light receiving unit RU shown in Fig. 1A receives the reflection light (first reflection light) of the object OB at a time when the irradiation light intensity distribution LID1 as shown in Fig. 2A is formed, in this embodiment. In a case where the detected amount of light reception at this time is Ga, Ga corresponds to the intensity INTa. In addition, the light receiving unit RU receives the reflection light (second reflection light) of the object OB at a time when the irradiation light intensity distribution LID2 as shown in Fig. 2B is formed. In a case where the detected amount of light reception of the reflection light is Gb, Gb corresponds to the intensity INTb. Accordingly, when the relationship between the detected amounts Ga and Gb of light reception is acquired, the relationship between the intensities INTa and INTb is acquired, and the direction DDB in which the object OB is located can be acquired.

For example, a control amount (for example, a current amount), a transformation coefficient, and an emitted amount of light of the light source unit LS1 shown in Fig. 2A are denoted by Ia, k, and Ea. In addition, a control amount (for example, a current amount), a transformation coefficient, and an emitted amount of light of the light source unit LS2 shown in Fig. 2B are denoted by Ib, k, and Eb. Then, the following Equations (1) and (2) are satisfied.

$$Ea = k \cdot Ia \qquad (1)$$

$$Eb = k \cdot Ib \qquad (2)$$

In addition, the attenuation coefficient of the source light (first source light) emitted from the light source unit LS1 is denoted by fa, and the detected amount of light reception of the reflection light (first reflection light) corresponding to this source light is denoted by Ga. Furthermore, the attenuation coefficient of the source light (second source light) emitted from the light source unit LS2 is denoted by fb, and the detected amount of light reception of the reflection light (second reflection light) corresponding to this source light is denoted by Gb. Then, the following Equations (3) and (4) are satisfied.

$$Ga = fa \cdot Ea = fa \cdot k \cdot Ia \quad (3)$$

$$Gb = fb \cdot Eb = fb \cdot k \cdot Ib \quad (4)$$

Thus, the ratio between the detected amounts Ga and Gb of light reception can be represented as in the following Equation (5).

$$Ga/Gb = (fa/fb) \cdot (Ia/Ib) \quad (5)$$

Here, "Ga/Gb" can be specified based on the result of the light reception in the light receiving unit RU, and "Ia/Ib" can be specified based on the amount of control of the control unit 60 for the irradiation unit EU. The intensities INTa and INTb shown in Fig. 3A and the attenuation coefficients fa and fb have unique relationship. For example, in a case where the attenuation coefficients fa and fb have small values, and the attenuation amounts are large, the intensities INTa and INTb are small. On the other hand, in a case where the attenuation coefficients fa and fb have large values, and the attenuation amounts are small, the intensities INTa and INTb are large. Accordingly, by acquiring the ratio "fa/fb" between the attenuation ratios by using the above-described Equation (5), the direction, the position, and the like of an object can be acquired.

To be more specific, one amount of control Ia is fixed to Im, and the other amount of control Ib is controlled such that the ratio Ga/Gb between the detected amounts of light reception is one. For example, as illustrated in Fig. 7A to be described later, the light source units LS1 and LS2 are controlled so as to be alternately turned on with opposite phases, the waveform of the detected amount of light reception is analyzed, and the other amount of control Ib is controlled such that the detected waveform is not observed (Ga/Gb=1). Then, based on the other amount of control Ib=Im· (fa/fb) at this time, the ratio fa/fb between the attenuation coefficients is acquired, and the direction, the position, and the like of the object are acquired.

In addition, as in the following Equations (6) and (7), a control operation may be performed such that Ga/Gb=1, and a value acquired by adding Ia and Ib is constant.

$$Ga/Gb = 1 \quad (6)$$

$$Im = Ia + Ib \quad (7)$$

Then, by substituting Equations (6) and (7) into Equation (5), the following Equation (8) is satisfied.

$$Ga/Gb = 1 = (fa/fb) \cdot (Ia/Ib) = (fa/fb) \cdot \{(Im-Ib)/Ib\} \quad (8)$$

By using Equation (8), Ib can be represented in the following Equation (9).

$$Ib = \{fa/(fa+fb)\} \cdot Im \quad (9)$$

Here, when it is set such that $\alpha = fa/(fa+fb)$, Equation (9) can be represented as the following Equation (10), and the ratio fa/fb between the attenuation coefficients can be represented in the following Equation (11) by using $\alpha$.

$$Ib = \alpha \cdot Im \qquad (10)$$

$$fa/fb = \alpha/(1-\alpha) \qquad (11)$$

Accordingly, when it is controlled such that Ga/Gb=1 and a value acquired by adding Ia and Ib is equal to a constant value Im, $\alpha$ can be acquired by using Equation (10) using Ib and Im at that time, and the ratio fa/fb between the attenuation coefficients can be acquired by substituting the acquired $\alpha$ into Equation (11). Therefore, the direction, the position, and the like of the object can be acquired. In addition, by controlling Ga/Gb=1 and a value acquired by adding Ia and Ib to be constant, the effects of the external disturbing light and the like can be offset, whereby the detection accuracy is improved.

As above, the technique for detecting the direction, the position, and the like of an object by alternately forming the irradiation light intensity distribution LID1 shown in Fig. 2A and the irradiation light intensity distribution LID2 shown in Fig. 2B has been described. However, in a case where a decrease in the detection accuracy or the like is allowed to some degree, it is possible to acquire the direction, the position, and the like of an object by forming one of the irradiation light intensity distribution LID1 shown in Fig. 2A and the irradiation light intensity distribution LID2 shown in Fig. 2B.

3. Configuration Example

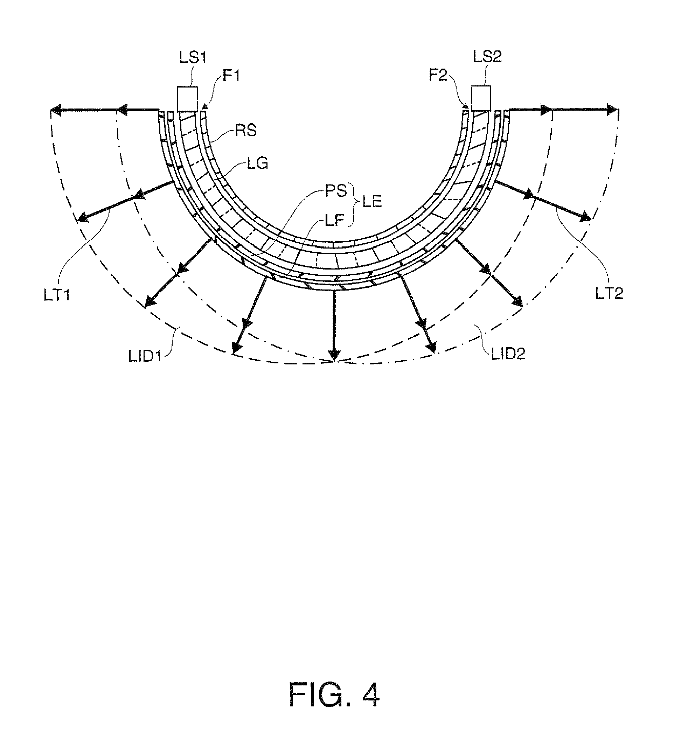

Next, first and second configuration examples of an optical detection device according to this embodiment will be described. Fig. 4 shows the first configuration example of an optical detection device according to this embodiment.

In this first configuration example, the light source unit LS1 is disposed on one end side of the light guide LG as denoted by F1 shown in Fig. 4. In addition, the second light source unit LS2 is disposed on the other end side of the light guide LG as denoted by F2. The light source unit LS1 emits source light to the light incident surface disposed on one end side (F1) of the light guide LG, thereby forming (setting) the first irradiation light intensity distribution LID1 in the detection area of an object. On the other hand, the light source unit LS2 emits second source light to the light incident surface disposed on the other end side (F2) of the light guide LG, thereby forming the second irradiation light intensity distribution LID2, which is different from the first irradiation light intensity distribution LID1, in the detection area.

In other words, in the first configuration example shown in Fig. 4, by arranging the light source units LS1 and LS2 on both ends of the light guide LG and alternately turning on the light source units LS1 and LS2 with opposite phases as illustrated in Fig. 7A to be described later, the state shown in Fig. 2A and the state shown in Fig. 2B are alternately formed. In other words, the irradiation light intensity distribution LID1 in which the intensity on one end side of the light guide LG increases and the irradiation light intensity distribution LID2 in which the intensity of the other end side of the light guide LG increases are alternately formed, the reflection light of an object is received, and the direction and the like of the object are specified based on the result of the light reception.

According to this first configuration example, only one light guide LG is arranged, and accordingly, the downsizing and the like of the optical detection device can be achieved.

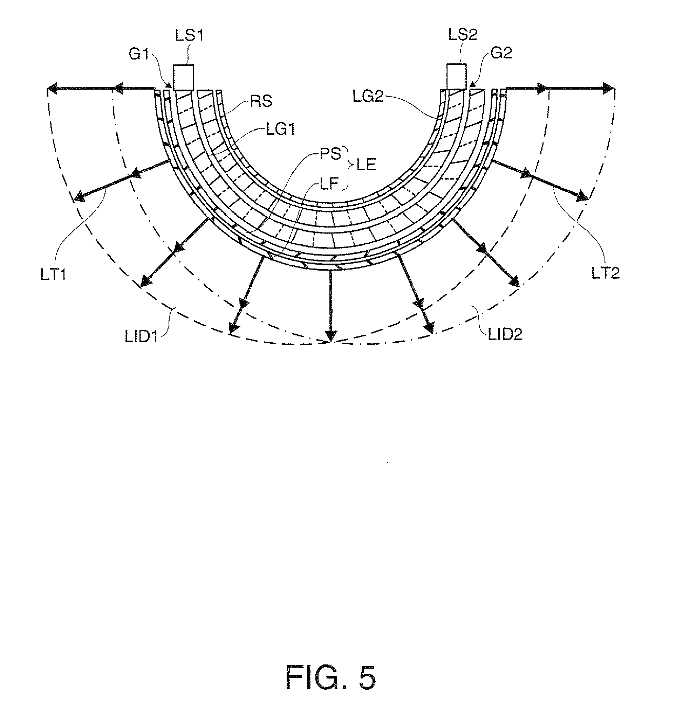

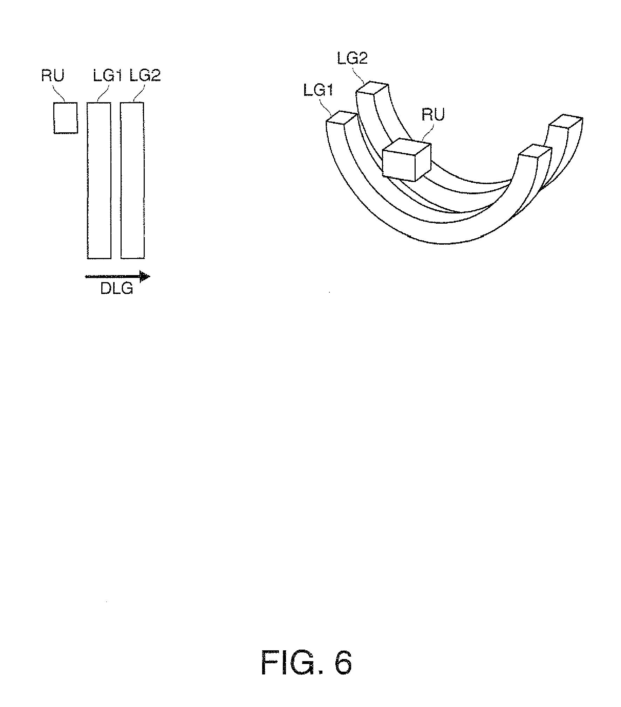

Fig. 5 is a second configuration example of the optical detection device. In the second configuration example, a second light guide LG2 is further arranged. As shown in Fig. 6, the light guide LG and the second light guide LG2 are disposed so as to be aligned in the direction DLG intersecting (orthogonal to) a face formed along a direction in which the light guide LG and the irradiation direction setting unit LE are aligned. For example, the light guides LG1 and LG2 are disposed along a direction (the Z direction) orthogonal to the face (a face parallel to the XY plane) of the detection area RDET shown in Fig. 1B. Accordingly, the light guides LG1 and LG2 can be compactly housed in the optical detection device, and therefore an increase in the size of the optical detection device can be suppressed.

In order to allow easy understanding of the figure, the light guides LG1 and LG2 are drawn so as to be aligned in the radial direction of the arc shape in Fig. 5. However, actually, the light guides LG1 and LG2 are arranged to have the positional relationship illustrated in Fig. 6.

In Fig. 5, the second light source unit LS2 that emits the second source light is disposed in addition to the light source unit LS1. Then, the curve-shaped light guide LG2 guides second source light emitted from the second light source unit LS2 along a light guiding path having a curved shape.

Then, the light source unit LS1 emits the source light to the light incident surface disposed on one end side (G1) of the light guide LG1, thereby forming the first irradiation light intensity distribution LID1 in the detection area of an object. Meanwhile, the second light source unit LS2 emits the second source light to the light incident surface disposed on the other end side (G2) of the second light guide, thereby forming the second irradiation light intensity distribution LID2 different from the first irradiation light intensity distribution LID1 in the detection area.

In other words, in the second configuration example, the light guide LG1 and the light source unit LS1 that emits light so as to be incident thereto are arranged, and the light guide LG2 and the light source unit LS2 that emits light so as to be incident thereto are arranged. Then, by alternately turning on the light source units LS1 and LS2 with opposite phases as shown in Fig. 7A to be described later, the state shown in Fig. 2A and the state shown in Fig. 2B are alternately formed. Then, the reflection light of an object is received, and the direction and the like of the object are specified based on the result of the light reception.

According to the second configuration example, the optical design of the light guides LG1 and LG2 can be simplified.

For example, in order to form a linear intensity distribution as shown in Fig. 3A, optical design for adjusting the light emission characteristics of the light guide is necessary. In other words, in a case where the attenuation rate of the source light is, for example, 0.9, the intensity change is based on the hyperbolic-curve characteristic such as 90%, 81%, and 73%, and accordingly, the intensity does not linearly change. Accordingly, in a case where the linear intensity distribution is formed as in Fig. 3A, the adjustment of the light emission characteristics such as a silk printing method or the like is necessary.

However, according to the technique using one light guide LG as in the first configuration example illustrated in Fig. 4, it is difficult to perform such adjustment of the light emission characteristics. In other words, when the light emission characteristics are adjusted so as to allow the intensity change in the irradiation light intensity distribution LID1 to be linear by processing the surface of the light guide LG, the intensity change in the irradiation light intensity distribution LID2 becomes non-linear. On the other hand, when the light emission characteristics are adjusted so as to allow the intensity change in the irradiation light intensity distribution LID2 to be linear by processing the surface of the light guide LG, the intensity change in the irradiation light intensity distribution LID1 becomes non-linear.

From this point of view, according to the second configuration example illustrated in Fig. 5, the light guide LG1 is disposed in correspondence with the light source unit LS1, and the light guide LG2 is disposed in correspondence with the light source unit LS2. The light emission characteristics of the light guide LG1 may be adjusted by processing the surface thereof such that the intensity change in the irradiation light intensity distribution LID1 is linear. On the other hand, the light emission characteristics of the light guide LG2 may be adjusted by processing the surface thereof such that the intensity change in the irradiation light intensity distribution LID2 is linear. Accordingly, the optical design thereof can be simplified.

Furthermore, even in a case where the characteristics of the intensity change are not the linear characteristics as shown in Fig. 3A, but, for example, hyperbolic characteristics or the like, such a case can be responded by performing a correction process using software or the like. In other words, even in a case where linear characteristics are not optically formed, the characteristics can be adjusted to be linear by performing a correction process for the result of the light reception. Accordingly, in a case where such a correction process is performed, by employing a configuration in which two light guides LG1 and LG2 as shown in Fig. 5 are not arranged, but only one light guide LAG is arranged as shown in Fig. 4, downsizing or the like of the optical detection device can be achieved.

According to the optical detection device of this embodiment, the angle can be sensed by using concentric light guides having a curved shape. Since the light guide has a curved shape, the irradiation light can be emitted in a radial pattern, and accordingly, the direction, the position, and the like of an object can be detected in a broad range, compared to a case where a technique using a linear-shaped light guide or the like is used. For example, according to a technique using a linear-shaped light guide, in order to enable detection in a broad range, the length of the light guide needs to be long, and the scale of the system is increased. In contrast to this, according to this embodiment, as shown in Fig. 1A, by arranging only an irradiation unit having a small occupation area, the direction, the position, and the like of an object can be detected in a broad range. In addition, according to the optical detection device of this embodiment, the detection system can be downsized, compared to a case where a technique in which light source units (irradiation units) are disposed, for example, on the four corners of the display area is used. Furthermore, since the number of arranged irradiation units, for example, is one or two, the degree of freedom of installation of the device can be increased. In addition, according to this embodiment, by arranging only the irradiation unit to the upper side of the display area, for example, as shown in Fig. 1A, the direction, the position, and the like of an object can be detected. Accordingly, the installation of the device can be performed in an easy manner. In addition according to the technique in which the light source units are arranged on the four corners of the display area, there is a concern that the presence of the light source units arranged on the four corners may obstruct an image display on the display area. However, according to the optical detection device of this embodiment, the occurrence of such a situation can be suppressed.

4. Position Detecting Technique

Next, an example of a technique for detecting the position of an object using an optical detection device according to this embodiment will be described. Fig. 7A is an example of a signal waveform for controlling the light emission of the light source units LS1 and LS2. A signal SLS1 is an emission control signal of the light source unit LS1, a signal SLS2 is an emission control signal of the light source unit LS2, and the signals SLS1 and SLS2 have opposite phases. In addition, a signal SRC is a light reception signal.

For example, the light source unit LS1 is turned on (emits light) in a case where the signal SLS1 is at the H level and is turned off in a case where the signal SLS1 is at the L level. In addition, the light source unit LS2 is turned on (emits light) in a case where the signal SLS2 is at the H level and is turned off in a case where the signal SLS2 is at the L level. Accordingly, the light source unit LS1 and the light source unit LS2 are alternately turned on during a first period T1 shown in Fig. 7A. In other words, the light source unit LS2 is turned off during a period during which the light source unit LS1 is turned on. Accordingly, the irradiation light intensity distribution LID1 as shown in Fig. 2A is formed. On the other hand, the light source unit LS1 is turned off during a period during which the light source unit LS2 is turned on. Accordingly, the irradiation light intensity distribution LID2 as shown in Fig. 2B is formed.

As above, the control unit 60 shown in Fig. 1A controls to allow the light source unit LS1 and the light source unit LS2 to alternately emit light (be turned on) during the first period T1. During this first period T1, the direction, in which an object is located, seen from the optical detection device (irradiation unit) is detected. To be more specific, for example, the emission control under which Ga/Gb=1 and a value acquired by adding the control amounts Ia and Ib is constant as in the above-described Equations (6) and (7) is performed during the first period T1. Then, as illustrated in Fig. 3B, the direction DDB in which the object OB is located is acquired.

For example, the ratio fa/fb between the attenuation coefficients is acquired from Equations (10) and (11), and the direction DDB in which the object OB is located is acquired by using the technique described with reference to Figs. 3A and 3B. Then, during a second period T2 following the first period T1, a distance to the object OB (a distance along the direction DDB) is detected based on the result of the light reception in the light receiving unit RU. Then, the position of the object is detected based on the detected distance and the direction DDB of the object OB. In other words, in Fig. 3B, when the distance to the object OB from the arranged position PE of the optical detection device and the direction DDB in which the object OB is located are acquired, the X and Y coordinates position of the object OB on the XY plane shown in Figs. 1A and 1B can be specified. As above, by acquiring the distance based on a temporal gap between the turn-on timing of the light source and the light reception timing and using the distance together with the result of the acquired angle, the position of the object OB can be specified.

To be more specific, as illustrated in Fig. 7A, a time $\Delta t$ from the light emission timing of the light source units LS1 and LS2 according to the emission control signals SLS1 and SLS2 to a timing when the light reception signal SRC becomes active (a timing when reflection light is received) is detected. In other words, a time $\Delta t$ until light emitted from the light source units LS1 and LS2 is reflected by the object OB and is received by the light receiving unit RU is detected. Since the speed of light is known, a distance to the object OB can be detected by detecting this time $\Delta t$. In other words, a gap width (time) of arrival time of the light is measured, and the distance is acquired based on the speed of light.

In addition, since the speed of light is quite fast, there is also a problem in that it is difficult to detect the time $\Delta t$ by simply acquiring a difference by using only an electrical signal. In order to solve such a problem, as illustrated in Fig. 7B, it is preferable to modulate the emission control signal. Here, Fig. 7B is an example of a schematic signal waveform that represents the intensity (the current amount) of the light by the amplitudes of the control signals SLS1 and SLS2.

To be more specific, as illustrate in Fig. 7B, the distance is detected, for example, by using a known TOF (Time of Flight) method using continuous waveform modulation. In the continuous waveform modulated TOF method, continuous light of which the intensity is modulated by using a continuous waveform having a predetermined period is used. Then, by emitting the light of which the intensity is modulated and receiving reflection light at a time interval shorter than the modulation period a plurality of times, the waveform of the reflection light is demodulated, and the distance is detected by acquiring a phase difference between the irradiation light and the reflection light. In Fig. 7B, only the intensity of light corresponding to any one of the control signals SLS1 and SLS2 may be modulated. In addition, the waveform may be modulated by using not a clock waveform as shown in Fig. 7B but a continuous triangular waveform or a sine waveform. In addition, the distance may be detected by using a pulse-modulated TOF method in which pulsed light is used as the continuously modulated light. A technique of detecting the distance is disclosed in detail, for example, in JP-A-2009-8537 and the like.

Fig. 8 shows a modified example of this embodiment. As shown in Fig. 8, first and second irradiation units EU1 and EU2 are disposed. The first and second irradiation units EU1 and EU2 are arranged so as to be separated from each other by a predetermined distance DS in a direction along the surface of the detection area RDET of an object OB. In other words, the first and second irradiation units EU1 and EU2 are arranged so as to be separated from each other by the distance DS along the X-axis direction shown in Figs. 1A and 1B.

The first irradiation unit EU1 emits first irradiation light of which the intensity differs in accordance with the irradiation direction in a radial pattern. The second irradiation unit EU2 emits second irradiation light of which the intensity differs in accordance with the irradiation direction in a radial pattern. A light receiving unit RU receives first reflection light acquired by reflecting the first irradiation light emitted from the first irradiation unit EU1 on an object OB and second reflection light acquired by reflecting the second irradiation light emitted from the second irradiation unit EU2 on the object OB. Then, the detection unit 50 detects the position POB of the object OB based on the result of the light reception in the light receiving unit RU.

To be more specific, the detection unit 50 detects the direction of the object OB with respect to the first irradiation unit EU1 as a first direction DDB1 (at an angle θ1) based on the result of the light reception of the first reflection light. In addition, the detection unit 50 detects the direction of the object OB with respect to the second irradiation unit EU2 as a second direction DDB2 (at an angle θ2) based on the result of the light reception of the second reflection light. Then, the position POB of the object OB is acquired based on the first direction DDB1 (θ1) and the second direction DDB2 (θ2) that have been detected and a distance DS between the first and second irradiation units EU1 and EU2.

According to the modified example shown in Fig. 8, the position POB of the object OB can be detected without acquiring the distance between the optical detection device and the object OB unlike Figs. 7A and 7B.

In the modified example shown in Fig. 8, it is preferable that the light receiving unit RU is arranged at a position that is equally distant (or approximately equally distanced) from the irradiation units EU1 and EU2. To be more specific, the light receiving unit RU is arranged such that a first distance from the arranged position PE1 of the irradiation unit EU1 to the arranged position (a representative position or a center position) of the light receiving unit RU and a second distance from the arranged position PE2 of the irradiation unit EU2 to the arranged position of the light receiving unit RU is the same (or approximately the same). By employing such bilaterally-symmetric arrangement, a difference between the irradiation light emitted from the irradiation unit EU1 and the irradiation light emitted from the irradiation unit EU2 has monotonicity. Accordingly, in a case where the coordinates of the object are detected by allowing the light receiving unit RU to receive reflection light acquired by reflecting the irradiation light on the object, the detection resolution of the amount of reception light in the light receiving unit RU can be maximally used, and accordingly, the accuracy of coordinate detection can be improved.

5. Regulation of Irradiation Direction

In a case where an object such as a finger of a user is detected by setting a detection area RDET as shown in Fig. 1B, when the irradiation light emitted from the irradiation unit EU is spread in the Z direction shown in Fig. 1B, incorrect detection may be performed. In other words, while a finger of a user is a detection object, the body side of the user may be detected. For example, in Fig. 1A, in a case where the body of the user is close to the screen 20 side, when the finger of the user as the detection object is present in the detection area RDET, the object may be incorrectly detected.

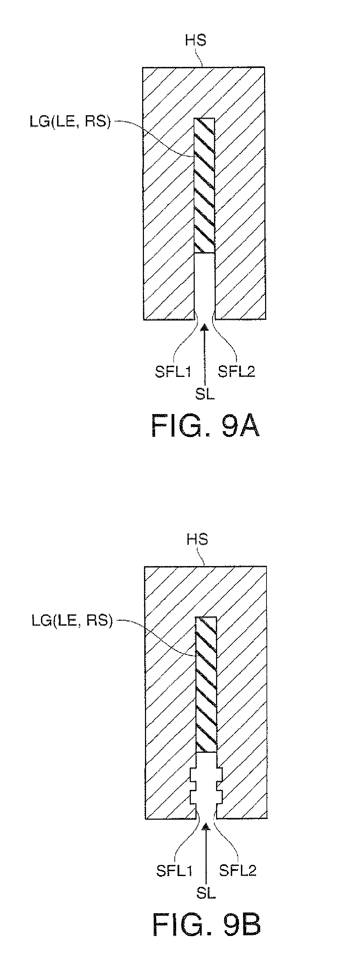

Thus, according to the optical detection device of this embodiment, an irradiation direction regulating unit (an irradiation direction limiting unit) is arranged which regulates the irradiation direction of the irradiation light to be in a direction along the surface (a surface parallel to the XY plane) of the detection area RDET of an object. To be more specific, in Fig. 9A, the irradiation direction regulating unit is implemented by a slit SL. This slit SL has a first slit face SFL1 and a second slit face SFL2 that are formed along the surface of the detection area RDET. As above, according to this embodiment, by disposing the slit SL, which is opened in the irradiation direction, in the casing HS of the optical detection device, the irradiation direction regulating unit of the optical detection device is realized.

By disposing such a slit SL, light traveling from the light guide LG is regulated to be in the direction along the slit faces SFL1 and SFL2. Accordingly, the irradiation light emitted from the irradiation unit EU shown in Fig. 1B can be regulated to be light parallel to the XY plane. Thus, the irradiation light irradiating the detection area RDET can be prevented from being spread in the Z direction. Accordingly, in a case where the body of a user is close to the screen 20, the body of the user can be prevented from being incorrectly detected as an object such as a finger, a touch pen, or the like. Therefore, the position of the object can be correctly detected without arranging a device that detects the position in the Z direction.

In Fig. 9B, concave portions are formed in the slit faces SFL1 and SFL2. In other words, although the slit faces SFL1 and SFL2 have a flat shape in Fig. 9A, the slit faces SFL1 and SFL2 shown in Fig. 9B do not have a flat shape, and depressions are formed therein. By disposing such concave portions, the surface reflection at the slit faces SFL1 and SFL2 can be suppressed. Accordingly, irradiation light that is more parallel to the XY plane can be output to the detection area RDET.

In addition, by performing a process such as nonreflecting coating for the surfaces of the slit faces SFL1 and SFL2, the same function as that of the concave portions can be realized. In Figs. 9A and 9B, a case where the irradiation direction regulating unit that regulates the blurring of the irradiation light in the Z direction is implemented by the slit SL is shown. However, for example, the irradiation direction regulating unit may be implemented by using an optical sheet such as a louver film. For example, the louver film LF shown in Fig. 2A has a function of regulating the direction of the directivity of the light output from the light guide LG to be the direction of the normal line. Accordingly, in order to realize the same function as that of the irradiation direction regulating unit through the slit SL, a louver film may be disposed which has a configuration of the arrangement for regulating the output direction of light from the light guide LG to be a direction parallel to the XY plane shown in Fig. 1B.

6. Detailed Example of Structure of irradiation Unit

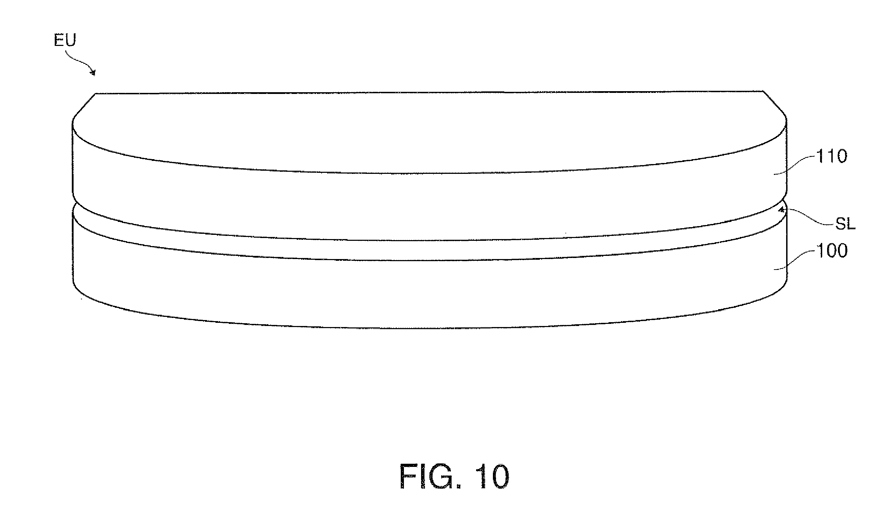

Next, a detailed structural example of the irradiation unit of an optical detection device according to this embodiment will be described with reference to Figs. 10 to 12. Figs. 10 to 12 are diagrams illustrating a detailed structure of the irradiation unit described with reference to Fig. 4.

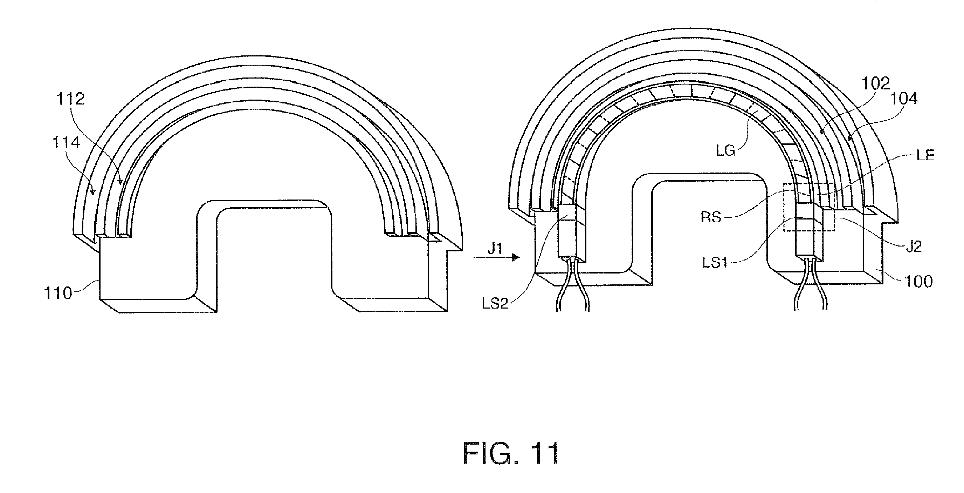

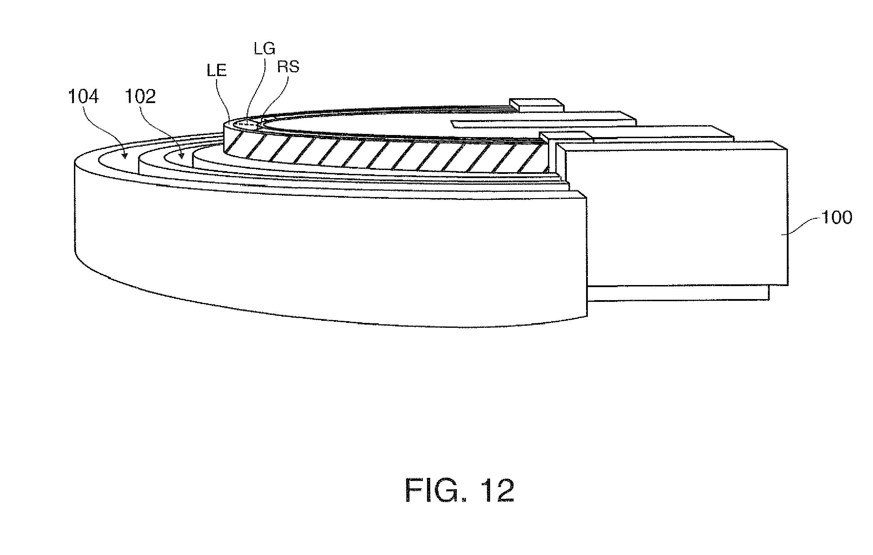

Fig. 10 is a perspective view of the irradiation unit EU (EU1 or EU2) seen from the opening side of the slit SL. This irradiation unit EU is configured by fan-shaped casings 100 and 110. Fig. 11 is a perspective view of the casings 100 and 110 seen from the inner face by separating the fan-shaped casings 100 and 110 configuring the irradiation unit EU. Fig. 12 is a perspective view of the casing 100 seen from the direction J1 shown in Fig. 11. As shown in Figs. 10, 11, and 12, the irradiation unit EU has a structure in which the fan-shaped casings 100 and 110 overlap each other so as to allow the inner faces thereof face each other.

As shown in Figs. 11 and 12, arc-shaped groove portions 102 and 104 are formed in the inner face of the casing 100, and arc-shaped groove portions 112 and 114 are formed in the inner face of the casing 110. The groove portions 102 and 112 are groove portions that are formed on the inner circumferential side, and the groove portions 104 and 114 are groove portions that are formed on the outer circumferential side. By forming such groove portions 102, 104, 112, and 114 in the casings 100 and 102, the concave portions of the slit faces SFL1 and SFL2 described with reference to Fig. 9B are implemented.

As shown in Figs. 11 and 12, the light guide LG is arranged on the inner circumferential side of the groove portion 102. In addition, on the outer circumferential side of the light guide LG, an irradiation direction setting unit LE (a prism sheet, a louver film, or the like) is arranged. On the inner circumferential side of the light guide LG, a reflection sheet RS is arranged. By employing such an arranged configuration, the irradiation light output from the outer circumferential side of the light guide LG is set in a direction that is the direction of the normal line by the irradiation direction setting unit LE and is output from the slit SL of the irradiation unit EU. At this time, by the irradiation direction regulating unit that is implemented by the groove portions 102, 104, 112, and 114, the irradiation direction of the irradiation light is regulated so as to be along the surface (a surface parallel to the XY plane) of the detection area RDET shown in Fig. 1B.

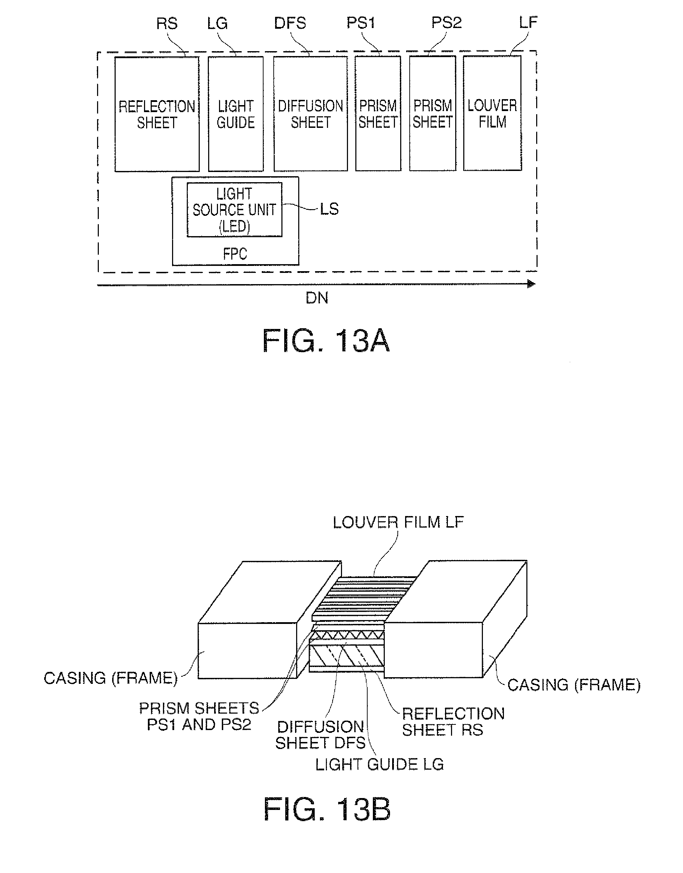

Figs. 13A and 13B are diagrams illustrating a detailed structure of a portion denoted by J2 shown in Fig. 11.

As shown in Fig. 13A, the light emitted from the light source unit LS (LS1 or LS2) that is arranged in an FPC (flexible printed circuit board) is incident to the light incident surface of the light guide LG. A reflection sheet RS is disposed on the inner circumferential side of the light guide LG, and a diffusion sheet DFS is disposed on the outer circumferential side thereof. A prism sheet PS1 is disposed on the outer circumferential side of the diffusion sheet DFS, a prism sheet PS2 is disposed on the outer circumferential side of the prism sheet PS1, and a louver film LF is disposed on the outer circumferential side of the prism sheet PS2. In addition, as shown in Fig. 13B, the prism sheets PS1 and PS2 are arranged so as to allow the edge lines thereof are orthogonal to each other.

In Figs. 13A and 13B, the surface luminance of light output from the outer circumferential side of the light guide LG is uniformized by the diffusion sheet DFS. In other words, by passing through the diffusion sheet DFS, the output light becomes diffused light having uniform luminance.

The prism sheets PS1 and PS2 have a function of collecting the light output from the outer circumferential side of the diffusion sheet DFS to be in a direction DN (the direction of the normal line) from the inner circumferential side toward the outer circumferential side of the light guide LG. In other words, after the surface luminance is uniformized by the diffusion sheet DFS, the light is collected in the direction DN by the prism sheets PS so as to improve the luminance.

The louver film LF is a lattice-shaped light shielding member that shields light, which is output from the outer circumferential side of the prism sheets PS1 and PS2, having a low viewing angle. By disposing the louver film LF, the light traveling in the direction DN passes through the louver film LF so as to be output from the irradiation unit EU to the outer circumferential side, and the light having a low viewing angle is blocked.

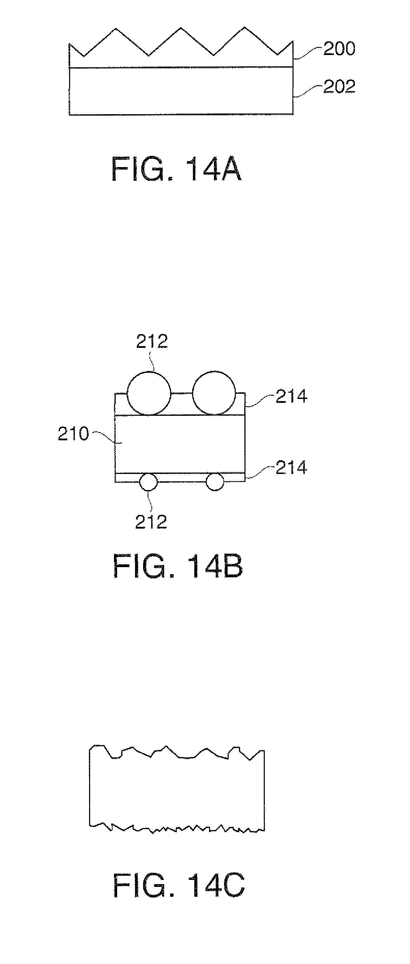

Fig. 14A shows an example of the prism sheet PS (PS1 or PS2). The prism surface 200 of the prism sheet PS, for example, is formed by an acrylic resin layer 200, and a substrate 202, for example, is formed by a polyester film layer 202.

Figs. 14B and 14C show an example of the diffusion sheet DFS. This diffusion sheet DFS is formed by coating a base film 210 (PET) with beads 212 together with a binder 214. Accordingly, a diffusion sheet DFS having a concave-convex surface as shown in Fig. 14C can be formed.

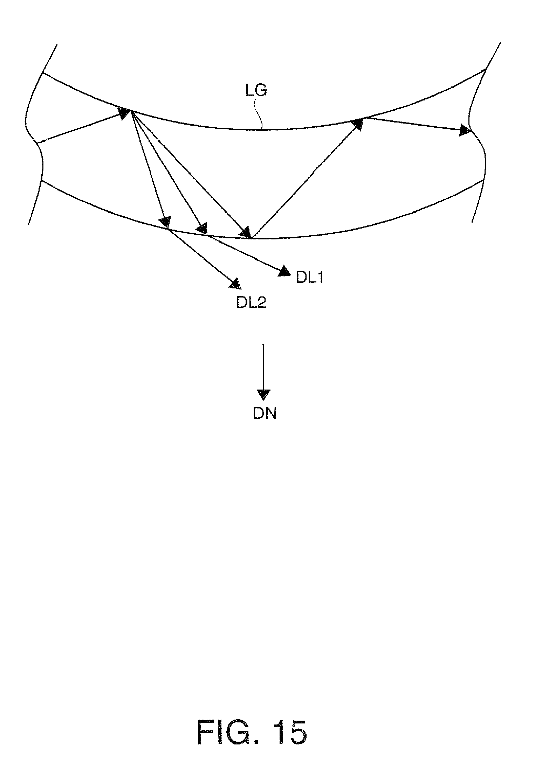

Fig. 15 is a diagram illustrating the function of the irradiation light setting unit LE that is implemented by the prism sheet PS, the louver film LF, and the like.

As shown in Fig. 15, in a case where source light is guided inside the light guide LG through total reflection, by performing a surface process by using a silk printing method or the like, for example, for the inner circumferential side of the light guide LG, a part of the source light is output from the outer circumferential side of the light guide LG. The irradiation light setting unit LE that is implemented by the prism PS, the louver film LF, and the like sets the directions DL1 and DL2 of the light output as above so as to face the direction DN (the direction of the normal line). Accordingly, it is possible to form the irradiation light intensity distributions LID1 and LID2 as shown in Figs. 2A and 2B.

7. Detection Unit

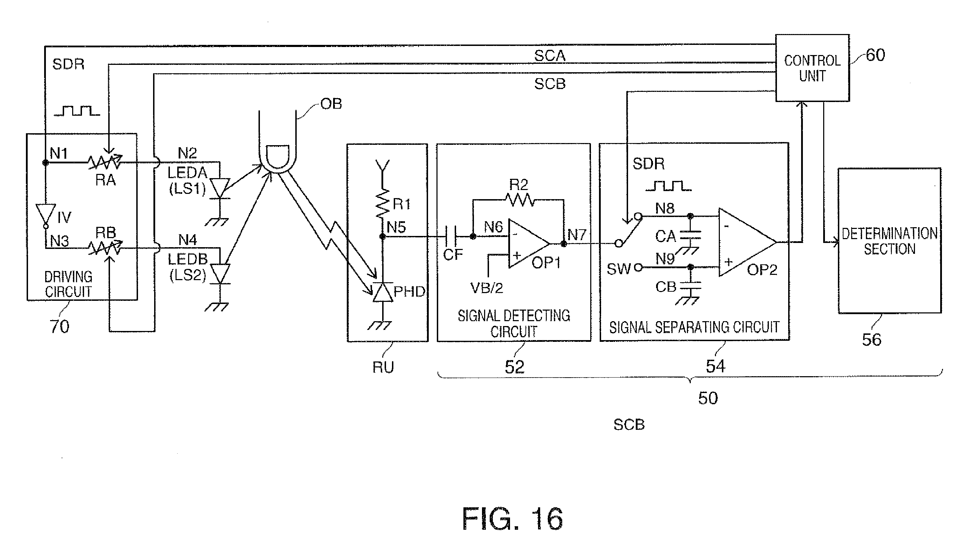

Next, a detailed example of the configuration of the detection unit 50 and the like will be described with reference to Fig. 16.

A driving circuit 70 drives a light emitting device LEDA of the light source unit LS1 and a light emitting device LEDB of the light source unit LS2. This driving circuit 70 includes variable resistors RA and RB and an inverter circuit IV. A driving signal SDR having a rectangular waveform is input from a control unit 60 to one end of the variable resistor RA and the inverter circuit IV. The variable resistor RA is disposed between the input node N1 of the signal SDR and a node N2 disposed on the anode-side of the light emitting device LEDA. The variable resistor RB is disposed between the output node N3 of the inverter circuit IV and a node N4 disposed on the anode-side of the light emitting device LEDB. The light emitting device LEDA is disposed between the node N2 and GND (VSS), and the light emitting device LEDB is disposed between the node N4 and GND.

During a first light emission period TA during which the driving signal SDR is at the H level, a current flows through the light emitting device LEDA through the variable resistor RA, and accordingly, the light emitting device LEDA emits light. Accordingly, the irradiation light intensity distribution LID1 as shown in Fig. 2A is formed, During a second light emission period TB during which the driving signal SDR is at the L level, a current flows to the light emitting device LEDB through the variable resistor RB, and accordingly, the light emitting device LEDB emits light. Accordingly, the irradiation light intensity distribution LID2 as shown in Fig. 2B is formed. Therefore, as described with reference to Fig. 7A, by alternately turning on the light source units LS1 and LS2, the irradiation light intensity distributions LID1 and LID2 shown in Figs. 2A and 2B can be formed during the first and second light emission periods TA and TB. In other words, the control unit 60 controls to alternately form the irradiation light intensity distribution LID1 and the irradiation light intensity distribution LID2 by alternately turning on the light source unit LS1 and the light source unit LS2 using the driving signal SDR.

The light receiving unit RU includes a light receiving device PHD that is implemented by a photo diode or the like and a resistor R1 that is used for Current-to-voltage conversion. During the first light emission period TA, reflection light, which is reflected from an object OB, according to the light emitted from the light emitting device LEDA is incident to the light receiving device PHD, and a current flows through the resistor R1 and the light receiving device PHD so as to generate a voltage signal at a node N5. On the other hand, during the second light emission period TB, reflection light, which is reflected from the object OB, according to the light emitted from the light emitting device LEDB is incident to the light receiving device PHD, and a current flows through the resistor R1 and the light receiving device PHD so as to generate a voltage signal at the node N5.

The detection unit 50 includes a signal detecting circuit 52, a signal separating circuit 54, and a determination section 56.

The signal detecting circuit 52 (a signal extracting circuit) includes a capacitor CF, an operational amplifier OP1, and a resistor R2. The capacitor CF serves as a high-pass filter that cuts off a DC component (direct current component) of the voltage signal applied at the node N5. By disposing such a capacitor CF, a low-frequency component or a DC component due to environmental light can be cut off, and accordingly, the detection accuracy can be improved. A DC bias setting circuit that is configured by the operational amplifier OP1 and the resistor R2 is a circuit that is used for setting a DC bias voltage (VB/2) for an AC signal after cutting off the DC component.

The signal separating circuit 54 includes a switch circuit SW, capacitors CA and CB, and an operational amplifies OP2. During the first light emission period TA during which the driving signal SDR is at the H level, the switch circuit SW connects the output node N7 of the signal detecting circuit 52 to a node N8 disposed on the inverted-input side (-) of the operational amplifier OP2. On the other hand, during the second light emission period TB during which the driving signal SDR is at the L level, the switch circuit SW connects the output node N7 of the signal detecting circuit 52 to a node N9 disposed on the non-inverted input side (+) of the operational amplifier OP2. The operational amplifier OP2 compares the voltage signal (effective voltage) applied at the node N8 and the voltage signal (effective voltage) applied at the node N9.

Then, the control unit 60 controls the resistance values of the variable resistors RA and RB of the driving circuit 70 based on the result of comparison of the voltage signals (effective voltages), which is acquired by the signal separating circuit 54, applied at the nodes N8 and N9. The determination section 56 determines the position of the object based on the result of control of the resistance values of the variable resistors RA and RB that is acquired by the control unit 60.

In this embodiment, the control operation described with reference to the above-described Equations (6) and (7) is realized by the detection unit 50 and the like shown in Fig. 16. In other words, when the detected amount of received light of the light receiving device PHD during the first light emission period TA is denoted by Ga, and the detected amount of received light of the light receiving device PHD during the second light emission period TB is denoted by Gb, the control unit 60 controls the resistance values of the variable resistors RA and RB based on the comparison result of the signal separating circuit 54 such that the ratio Ga/Gb between the detected amounts of received light is one.

In other words, the control unit 60 controls light emission of the light source units LS1 and LS2 such that the detected amount Ga of received light of the light receiving unit RU during the first light emission period TA during which the light source unit LS1 emits light and the detected amount Gb of received light of the light receiving unit RU during the second light emission period TB during which the light source unit LS2 emits light are the same.

For example, in a case where the detected amount Ga of received light during the first light emission period TA is larger than the detected amount Gb of received light during the second light emission period TB, the control unit 60 controls to increase the resistance value of the variable resistor RA so as to decrease the value of the current flowing through the light emitting device LEDA. In addition, the control unit 60 controls to decrease the resistance value of the variable resistor RB so as to increase the value of the current flowing through the light emitting device LEDB. Accordingly, the detected amount Ga of received light of the light receiving device PHD during the first light emission period TA decreases, and the detected amount Gb of received light of the light receiving device PHD during the second light emission period TB increases, whereby Ga and Gb are controlled such that Ga/Gb=1.

On the other hand, in a case where the detected amount Gb of received light during the second light emission period TB is larger than the detected amount Ga of received light during the first light emission period TA, the control unit 60 controls to decrease the resistance value of the variable resistor RA so as to increase the value of the current flowing through the light emitting device LEDA. In addition, the control unit 60 controls to increase the resistance value of the variable resistor RB so as to decrease the value of the current flowing through the light emitting device LEDB. Accordingly, the detected amount Ga of received light of the light receiving device PHD during the first light emission period TA increases, and the detected amount Gb of received light of the light receiving device PHD during the second light emission period TB decreases, whereby Ga and Gb are controlled such that Ga/Gb=1. In addition, in the case of Ga=Gb, the resistance values of the variable resistors RA and RB are not changed.

Accordingly, the amounts of emitted light of the light emitting devices LEDA and LEDB of the light source units LS1 and LS2 are controlled such that the intensities INTa and INTb shown in Fig. 3A are the same at the position of the object. Then, based on the resistance values of the variable resistors RA and RB and the like at a time when the above-described light emission control operation is performed, the position of the object is detected by using the technique described with reference to the above-described Equations (6) to (11) and the like. Accordingly, the effects of the external disturbing light such as environmental light can be suppressed to a minimum level, and therefore the detection accuracy of the position of an object can be improved.

In addition, the light emission controlling technique of this embodiment is not limited to the technique described with reference to Fig. 16, and various modifications can be made therein. For example, a technique may be used in which the light emitting device LEDB shown in Fig. 16 is used as a light emitting device of a reference light source unit. This reference light source unit is a light source unit that is arranged so as to be set such that the incidence of ambient light (external disturbing light, reflection light from an object, and the like) is regulated, for example, by being disposed at a position closer to the light receiving unit RU than other light source units (LS1, LS2, and LS11 to LS22) or being disposed inside the casing of the light receiving unit RU. Then, the control unit 60 controls light emission of the light source unit LS1 and the reference light source unit such that the detected amounts of received light at the light receiving unit RU are the same by alternately allowing the light source unit LS1 and the reference light source unit, not shown in the figure, to emit light during the first period. In addition, the control unit 60 controls light emission of the second light source unit LS2 and the reference light source unit such that the detected amounts of received light at the light receiving unit RU are the same by alternately allowing the second light source unit LS2 and the reference light source unit, not shown in the figure, to emit light during the second period. Accordingly, the light emission control is performed such that the detected amount of received light during the first light emission period during which the light source unit LS1 emits light and the detected amount of received light during the second light emission period during which the second light source unit LS2 emits light are substantially the same through the reference light source unit.

Although this embodiment has been described in detail as above, it is easily understood by those skilled in the art that various modifications can be made therein without substantially departing from the new matters and the advantages of the invention. Accordingly, all the modified examples belong to the scope of the invention. For example, a term that is written together with another term, which is a broader term or a synonymous term, at least once in the description presented here or the drawing can be replaced with the another term in any portion of the description or the drawings. In addition, the configurations and the operations of the optical detection device, the display device, and the electronic apparatus are not limited to those described in this embodiment, and various modifications can be made therein.

**Claims**

1.  An optical detection device comprising:

a light source unit that emits source light;
a curve-shaped light guide, that includes a light incident surface, to which the source light is incident, located in an end portion of the light guide and a convex surface from which the source light incident from the light incident surface is output;

an irradiation direction setting unit that receives the source light output from the convex surface of the light guide and sets an irradiation direction of irradiation light to a direction of a normal line of the convex surface;

a light receiving unit that receives reflection light acquired by reflecting the irradiation light on an object; and a detection unit that detects at least a direction in which the object is located based on a result of the light reception in the light receiving unit.

2. The optical detection device according to Claim 1, further comprising a second light source unit that emits second source light,

wherein a first irradiation light intensity distribution is formed in a detection area of the object as the source light is incident from the light incident surface disposed in one end portion of the light guide, and

a second irradiation light intensity distribution, which is different from the first irradiation light intensity distribution, is formed in the detection area of the object as the second source light is incident from the light incident surface disposed in the other end portion of the light guide.

3. The optical detection device according to Claim 1 or 2, further comprising:

a second light source unit that emits second source light; and

a curve-shaped second light guide that includes a light incident surface, to which the second source light is incident, located in an end portion of the second light guide and a convex surface from which the second source light incident from the light incident surface is output,

wherein a first irradiation light intensity distribution is formed in a detection area of the object as the source light is incident to the light incident surface disposed in one end portion of the light guide, and

a second irradiation light intensity distribution, which is different from the first irradiation light intensity distribution, is formed in the detection area as the second source light is incident to the light incident surface disposed in the other end portion of the second light guide.

4. The optical detection device according to Claim 2 or 3,

wherein the light guide and the second light guide are arranged so as to be aligned, and

the light guide and the second light guide are arranged so as to be aligned in a direction intersecting a surface formed along a direction in which the light guide and the irradiation direction setting unit are aligned.

5. The optical detection device according to Claim 2, wherein the first irradiation light intensity distribution is an intensity distribution in which the intensity of irradiation light decreases from one end portion of the light guide toward the other end portion of the light guide, and

the second irradiation light intensity distribution is an intensity distribution in which the intensity of irradiation light decreases from the other end portion of the light guide toward the one end portion of the light guide.

6. The optical detection device according to any one of Claims 2 to 4, further comprising a control unit that controls light emission of the light source unit and the second light source unit,

wherein the control unit controls so as to alternately form the first irradiation light intensity distribution and the second irradiation light intensity distribution by alternately allowing the light source unit and the second light source unit to emit light.

7. The optical detection device according to any one of Claims 2 to 5, further comprising a control unit that controls light emission of the light source unit and the second light source unit,

wherein the control unit performs emission control of the light source unit and the second light source unit such that a detected amount of light reception in the light receiving unit during a first light emission period during which the light source unit emits light and a detected amount of light reception in the light receiving unit during a second light emission period during which the second light source unit emits light are the same.

8. The optical detection device according to any one of Claims 1 to 6, wherein the detection unit detects a distance from the optical detection device to the object based on a result of the light reception in the light receiving unit and detects a position of the object based on the distance and the direction in which the object is located.

9. The optical detection device according to any one of the preceding claims, further comprising an irradiation direction regulating unit that regulates the irradiation direction of the irradiation light so as to be a direction of a normal line of the convex surface.

10. The optical detection device according to Claim 9,
wherein the irradiation direction regulating unit is a slit, which is disposed in a casing, covering the optical detection device, and
the slit has a first slit face and a second slit face, which face each other, formed along the direction of the normal line of the convex surface.

11. The optical detection device according to Claim 10, wherein concave portions are formed in the first slit face and the second slit face.

12. A display device comprising the optical detection device according to any one of the preceding claims.

13. An electronic apparatus comprising the optical detection device according to any one of the preceding claims 1 to 11.

60 — CONTROL UNIT

50 — DETECTION UNIT

EU

RU

X

Z

Y

20

ARD

10

## FIG. 1A

EU

RU

X

Z

Y

20

RDET

## FIG. 1B

FIG. 2A

FIG. 2B

FIG. 3A

FIG. 3B

FIG. 4

FIG. 5

FIG. 6

FIG. 7A

FIG. 7B

FIG. 8

EP 2 386 936 A2

HS

LG(LE, RS)

SFL1  SFL2
SL

FIG. 9A

HS

LG(LE, RS)

SFL1  SFL2
SL

FIG. 9B

EP 2 386 936 A2

EU

110

SL

100

## FIG. 10

FIG. 11

EP 2 386 936 A2

FIG. 12

RS     LG      DFS     PS1      PS2      LF

| REFLECTION SHEET | LIGHT GUIDE | DIFFUSION SHEET | PRISM SHEET | PRISM SHEET | LOUVER FILM |

LIGHT SOURCE UNIT (LED) — LS

FPC

DN

## FIG. 13A

LOUVER FILM LF

CASING (FRAME)

CASING (FRAME)

PRISM SHEETS PS1 AND PS2

DIFFUSION SHEET DFS

REFLECTION SHEET RS

LIGHT GUIDE LG

## FIG. 13B

FIG. 14A

FIG. 14B

FIG. 14C

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11345085 A
- JP 2001142643 A

- JP 2009008537 A